# EUROPÄISCHE PATENTANMELDUNG

(11) **EP 1 215 512 A2**
(43) Veröffentlichungstag der Anmeldung: **19.06.2002**
(21) Anmeldenummer: 01129181.2
(22) Anmeldetag: 10.12.2001
(51) Int. Cl.: G02B 1/11

(54) **Reflexionsminderungsbeschichtung für Ultraviolettlicht bei grossen Einfallswinkeln**

(30) Priorität: 15.12.2000 DE 10064143
(71) Anmelder: CARL ZEISS SEMICONDUCTOR MANUFACTURING TECHNOLOGIES AG, 73447 Oberkochen (DE)
(72) Erfinder: Kuschnereit, Ralf, Dr., 73447 Oberkochen (DE); Paul, Hans-Jochen, 73431 Aalen (DE)
(74) Vertreter: Patentanwälte Ruff, Wilhelm, Beier, Dauster & Partner

(57) **Zusammenfassung**

Zur Herstellung laserbeständiger, optischer Komponenten mit geringer Restreflexion und hoher Durchlässigkeit für UV-Licht aus einem Wellenlängenbereich von ca. 150 nm bis ca. 250 nm bei großen Einfallswinkeln aus dem Bereich von ca. 70° bis ca. 80°, insbesondere aus dem Bereich zwischen ca. 72° und ca. 76°, werden Reflexionsminderungsmehrlagenbeschichtungen mit nur drei oder vier Schichten vorgeschlagen. Für einfallendes p-polarisiertes UV-Licht sind Dreischichtsysteme verwendbar, bei denen zwischen zwei Schichten aus hochbrechendem und bei der betrachteten Wellenlänge geringfügig absorbierenden Material, insbesondere aus Hafniumoxid oder Aluminiumoxid, eine Schicht aus niedrigbrechendem Material, insbesondere Magnesiumfluorid, angeordnet ist. Hierdurch kann beispielsweise bei 248 nm Wellenlänge im Einfallswinkelbereich zwischen ca. 72° und ca. 76° eine Restreflexion von deutlich weniger als 1 % erreicht werden.

## Beschreibung

Die Erfindung betrifft eine optische Komponente mit geringem Reflexionsgrad für Ultraviolettlicht aus einem Wellenlängenbereich zwischen ca. 150 nm und ca. 250 nm bei großen Einfallswinkeln insbesondere zwischen ca. 70° und ca. 80°.

In vielen Bereichen steigt der Bedarf nach leistungsfähigen optischen Komponenten mit geringem Reflexionsgrad und hoher Durchlässigkeit bzw. Transmission für Ultraviolettlicht aus einem Wellenlängenbereich zwischen ca. 150 nm und ca. 250 nm. Licht aus diesem Wellenlängenbereich wird beispielsweise bei Mikrolithographiesystemen zur Herstellung von hochintegrierten Halbleiterbauelementen mit Hilfe von Wafersteppern oder Waferscannern verwendet. Dabei beleuchtet eine Lichtquelle über eine Beleuchtungsoptik eine Maske (Retikel), deren Bild mit Hilfe einer Projektionsoptik auf einen mit Photoresist beschichteten Halbleiterwafer abgebildet wird. Da bekanntlich die Feinheit der bei diesem Prozeß erzielbaren Strukturen zunimmt, je kürzer die Wellenlänge λ des verwendeten Lichts ist, werden bei modernsten Geräten Wellenlängen aus dem tiefen Ultraviolettbereich (Deep Ultraviolet, DUV) eingesetzt. Lichtquellen hierfür sind KrF-Excimerlaser mit einer Arbeitswellenlänge von λ=248 nm und ArF-Excimerlaser mit einer Arbeitswellenlänge von ca. λ=193 nm. Diese Laser erzeugen linear polarisiertes Licht, das bei schrägem Einfall auf eine Oberfläche einer optischen Komponente je nach Orientierung der Oberfläche als s-polarisiertes oder p-polarisiertes Licht einfällt.

Bekanntlich werden die Oberflächen transparenter optischer Komponenten zur Erhöhung ihrer Lichtdurchlässigkeit mit sogenannten Reflexionsminderungsschichten bzw. Antireflexschichten (AR-Schichten) beschichtet. Dabei werden i.d.R. Mehrschichtsysteme mit mehreren übereinanderliegenden Schichten aus dielektrischen Materialien mit unterschiedlichen Brechungsindizes n verwendet, bei denen i.d.R. Schichten aus einem hochbrechenden Material und Schichten aus einem relativ dazu niedrigbrechenden Material abwechselnd übereinander angeordnet sind.

Während für eine wirkungsvolle Reflexionsminderung bei senkrechtem Lichteinfall bei geeigneter Wahl der Schichtmaterialien wenige Schichten ausreichen können, nimmt erfahrungsgemäß die Anzahl erforderlicher Schichten zu, je größer der Einfallswinkel θ, d.h. der Winkel zwischen Lichteinfallsrichtung und Oberflächennormale, wird. Dieser Effekt ist beispielsweise in der EP 0 855 604 gezeigt, in der Reflexionsminderungsschichten für UV-Licht aus dem Wellenlängenbereich zwischen 150 nm und 250 nm für große Einfallswinkel zwischen 70° und 80° offenbart sind. Die dort vorgeschlagenen Mehrschichtsysteme zeichnen sich dadurch aus, daß die optischen Schichtdicken der Schichten aus hochbrechendem Material jeweils gleich und auch die optischen Schichtdicken der dazwischenliegenden Schichten aus niederbrechendem Material jeweils gleich sind, so daß eine periodische Schichtenfolge entsteht. Es werden für p-polarisiertes Licht mit λ=193 nm Beispiele gezeigt, nach denen zur Minimierung der Restreflexion auf Werte unterhalb ca. 0,5% bei θ=72° sieben Schichten, bei θ=74° neun Schichten und bei θ=76° sogar elf Schichten erforderlich sind. Bei p-polarisiertem Licht mit λ=248 nm sind für die entsprechenden Einfallswinkel jeweils zwei weitere Schichten erforderlich.

Der praktische Einsatz optischer Komponenten mit viellagigen Reflexionsminderungsschichten ist häufig dadurch beeinträchtigt, daß derartige Mehrschichtsysteme unter intensiver, energiereicher UV-Bestrahlung nur begrenzte Beständigkeit zeigen. Dabei tritt das Problem mangelnder Laserstabilität umso mehr in den Vordergrund, je größer die Energiedichte des auftreffenden Lichtes ist. Hohe Energiedichten von Laserlicht treten beispielsweise im Bereich von Einrichtungen zur Verschmälerung der Bandbreite von Excimerlasern auf. In der US 5 978 409 ist beispielhaft eine derartige Einrichtung gezeigt, bei der zur Aufweitung eines Laserstrahls vor Einfall auf ein Echelle-Gitter eine Anordnung von drei oder vier Prismen vorgesehen ist, auf deren Hypothenusenflächen das Laserlicht jeweils mit großem Einfallswinkel auftrifft. Bei einer im Hinblick auf die erreichbare Strahlaufweitung optimalen Konfiguration sind drei Prismen vorgesehen, auf deren Hypothenusenflächen das UV-Licht jeweils mit Einfallswinkeln von ca. θ=74° auftrifft. Da für diese Konfiguration bei einer Wellenlänge von 193 nm keine ausreichend laserbeständige Reflexionsminderungsschicht verfügbar ist, müßten unbeschichtete Prismen verwendet werden, was jedoch bei den verfügbaren Susbtratmaterialien (CaF₂ oder synthetischer Quarz) und zweifachem Durchlauf durch die Prismen zu Gesamtverlusten von mehr als 40% durch Reflexion führen würde. Als Alternative wird eine Ausführungsform mit vier Prismen vorgeschlagen, auf derem Hypothenusenflächen das Laserlicht mit kleineren Einfallswinkeln zwischen ca. 67° und ca. 71° auftrifft. Zur Reflexionsminderung ist auf den Flächen jeweils eine Einzelschicht aus Al₂O₃ aufgebracht, die eine ausreichende Laserstabilität haben sowie zu einer ausreichenden Reflexionsminderung führen soll. Die Restreflexion kann jedoch durch eine derartige Einzelschicht bei Einfallswinkeln um 74° nicht unter ca. 3% vermindert werden.

Der Erfindung liegt die Aufgabe zugrunde, eine Reflexionsminderungsbeschichtung für optische Komponenten vorzuschlagen, die für Ultraviolettlicht aus dem Wellenlängenbereich zwischen ca. 150 nm und ca. 250 nm bei großen Einfallswinkeln aus dem Bereich von ca. 70° bis ca. 80° eine wirksame Entspiegelung ermöglicht und sich durch hohe Laserbeständigkeit auszeichnet.

Zur Lösung dieser Aufgabe schlägt die Erfindung eine optische Komponente mit den Merkmalen von Anspruch 1 oder Anspruch 15 vor. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß der Erfindung wird eine optische Komponente mit geringem Reflexionsgrad für UV-Licht aus dem angegebenen Wellenlängenbereich bei großen Einfallswinkeln dadurch geschaffen, daß auf mindestens eine Oberfläche eines optischen Substrats zur Reflexionsminderung ein Mehrschichtsystem, d.h. eine mehrlagige Beschichtung mit mehreren übereinanderliegenden Schichten aufgebracht wird, die jeweils aus für das UV-Licht transparentem, dielektrischen Material bestehen. Die Schichtmaterialien sind hochbrechend oder niedrigbrechend, wobei ein hochbrechendes Material einen im Vergleich zum Brechungsindex des anderen Schichtmaterials höheren Brechungsindex und ein niedrigbrechendes Material einen relativ zum anderen Schichtmaterial niedrigeren Brechungsindex hat. Häufig liegt der Brechungsindex des Substratmaterials zwischen denjenigen der Schichtmaterialien. Das Mehrschichtsystem hat weniger als fünf Schichten. Vorzugsweise sind nur drei oder vier Schichten vorgesehen.

Durch die im Vergleich zu bekannten Mehrschichtsystemen geringere Anzahl von Schichten kann die Laserstabilität der Beschichtung schon allein dadurch verbessert werden, daß die Wahrscheinlichkeit von zur Schichtdegradation führenden Fehlern in der Mehrfachschicht i.d.R. geringer ist, je weniger Schichten aufgebracht werden. Bei derartigen, die Laserstabilität herabsetzenden Fehlern, kann es sich insbesondere um Verunreinigungen, Defekte oder Einschlüsse handeln, die die lokale Absorption erhöhen und dadurch zu einer ungleichmäßigen Strahlungsbelastung der Schicht führen können. Eine Reduzierung der Schichtzahl führt auch zu einer Prozeßvereinfachung, was die Kosten für die Bereitstellung erfindungsgemäß beschichteter Optikkomponenten verringern kann.

Die an das Substrat angrenzende Schicht, die im Folgenden auch als erste Schicht bezeichnet wird, besteht vorzugsweise aus einem hochbrechenden Material, so daß bei Dreischichtsystemen mit abwechselnd hochbrechenden und niedrigbrechenden Schichten die äußere, dritte Schicht, ebenfalls aus hochbrechendem Material besteht, während bei Vierschichtsystemen mit abwechselnd hoch- und niedrigbrechenden Schichten eine äußere Schicht aus niedrigbrechendem Material an das die Optikkomponente umgebende Medium grenzt.

Bekanntlich gibt es nur wenige Materialien, die im betrachteten Wellenlängenbereich zwischen ca. 150 nm und 250 nm einen ausreichend hohen Brechungsindex aufweisen, um gegenüber den verfügbaren niedrigbrechenden Schichtmaterialien ein für eine wirksame Mehrfachbeschichtung ausreichend großes Brechzahlverhältnis zu ermöglichen. Vorzugsweise liegt der Brechungsindex bzw. die Brechzahl n der hochbrechenden Materialen für die vorgesehene Wellenlänge bei Werten von n>1,7, insbesondere bei Werten n>2,0. Bevorzugt werden als hochbrechende Materialien Metalloxide verwendet, die aufgrund starker Bindungen eine relativ hohe spezifische Laserstabilität besitzen.

Ein besonderer Aspekt der Erfindung besteht darin, daß bei bevorzugten Ausführungsformen von der Transmissionserhöhung dienenden Entspiegelungsbeschichtungen eine oder mehrere Schichten, insbesondere die hochbrechenden Schichten, aus Materialien bestehen können, die das einfallende Licht in geringem Umfang absorbieren. Derartige Materialien werden zweckmäßig mit einem komplexen Brechungsindex **n** = n-ik beschrieben, wobei n der reelle Brechungsindex und k der Absorptionsindex bzw. der Extinktionskoeffizient bei der betrachteten Arbeitswellenlänge ist. Dieser liegt bei den sogenannten nicht-absorbierenden Materialien in der Regel unterhalb 10⁻⁶. Es hat sich gezeigt, daß es zur Vermeidung negativer Auswirkungen der Absorption i.d.R. ausreicht, solche Materialien zu wählen, bei denen der Absorptionskoeffizient k zwar größer als ca. 10⁻⁶ oder 10⁻⁵ ist, aber weniger als 0,01, insbesondere weniger als 0,005 beträgt, wobei solche Materialien bevorzugt sind, bei denen k nicht wesentlich mehr als 0,001 beträgt.

Durch die Erkenntnis, daß auch leicht absorbierende Materialien bei transmissionserhöhenden Entspiegelungsbeschichtungen mit Vorteil einsetzbar sind, werden dem Schichtdesign neue Dimensionen eröffnet, da das Spektrum verfügbarer Materialien, insbesonderen solcher mit hohem Brechungsindex, erweitert wird. Diese Vorteile können auch bei Mehrschichtsystemen mit mehr als drei oder vier Schichten und/oder bei anderen als den genannten Einfallswinkeln genutzt werden. Im Hinblick auf eine angestrebte Anhebung der Laserzerstörschwelle ist noch zu berücksichtigen, daß diese zwar von den Absorptionskoeffizienten der Materialien beeinflußt wird, daß jedoch auch der die Interferenzeffekte bewirkende Beschichtungsaufbau und das Herstellungsverfahren Einfluß auf den Absorptionsgrad der Beschichtung haben.

Bei bevorzugten Ausführungsformen erfindungsgemäßer Beschichtungen für 248 nm Wellenlänge wird Hafniumoxid (HfO₂) als hochbrechendes Material verwendet. Hafniumoxid hat in diesem Wellenlängenbereich einen reellen Brechungsindex n von ca. 2,1, weist jedoch in diesem Wellenlängenbereich auch Absorption auf und wurde u.a. aus diesem Grund bisher für Entspiegelungen nicht genutzt. Der Absorptionskoeffizent k beträgt ca. 0,001. Bei den Ausführungsformen wird gezeigt, daß bei Verwendung von Hafniumoxid als hochbrechendem Schichtmaterial für schräg einfallendes UV-Licht mit 248 nm Wellenlänge eine Reflexminderung auf weit unterhalb 0,5% Restreflexion möglich ist, wobei die Restreflexion bei θ=74° praktisch verschwindet. Der Anteil der Absorption kann in der Größenordnung von ca. 0,2% liegen, so daß derart beschichtete transparente Komponenten einen Transmissionsgrad von mehr als 99% oder mehr als 99,5% besitzen können.

Alternativ kann beispielsweise Zirkonoxid (ZrO₂) verwendet werden, das bei einem reellen Brechungsindex n von ungefähr 2,2 einen Absorptionskoeffizienten in der Größenordnung von k=0,01 aufweist.

Bei Mehrschichtsystemen für λ=193nm wird vorzugsweise Aluminiumoxid (Al₂O₃) als hochbrechendes Schichtmaterial verwendet, das bei dieser Wellenlänge einen reellen Brechungsindex in der Größenordnung von ca. n=1,7 und einen Absorptionskoeffizient von ca. k=0,001 aufweist. Auch andere Materialien vergleichbarer optischer Eigenschaften können geeignet sein.

Der Einfluß von Absorption, insbesondere auf die Transmission und die Schichtaufheizung, kann dadurch gering gehalten werden, daß die Gesamtdicke der Schichten aus hochbrechendem und ggf. absorbierenden Material gering gehalten wird, beispielsweise mit Gesamtschichtdicken der hochbrechenden Schichten von weniger als 100 nm. Die Gesamtdicke kann beispielsweise bei Verwendung von Hafniumoxid weniger als 50 nm oder, bei Verwendung von Aluminiumoxid, weniger als 70 nm betragen.

Es ist möglich, Schichtdicken zu verwenden, deren optische Schichtdicken von einer Viertel-Wellenlängen-Schichtdicke ("Quarterwave"-Schichtdicke) abweicht. Gegebenenfalls können alle Schichten des Mehrschichtsystems unterschiedliche physikalische Dicken aufweisen. Es sind jedoch auch Mehrschichtsysteme möglich, bei denen die Schichten gleichen Materials die gleiche optische Schichtdicke haben.

Als niedrigbrechende Materialien werden vorzugsweise Fluoride verwendet, insbesondere Magnesiumfluorid (MgF₂). Als Alternativen sind beispielsweise Calciumfluorid, Natriumfluorid, Lithiumfluorid oder Aluminiumfluorid denkbar, sofern der Brechungsindex des entsprechenden Materiales niedriger ist als derjenige des hochbrechenden Materials und ggf. des Substratmaterials. Geeignete Substratmaterialien für durchlässige optische Komponenten sind vor allem Siliziumoxid als Glas (synthetischer Quarz) oder einkristalline Materialien wie Calciumfluorid oder Magnesiumfluorid, ggf. auch Bariumfluorid.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte, sowie für sich schutzfähige Ausführungen darstellen können.

Ausführungsbeispiele der Erfindung sind in den Zeichnungen dargestellt und werden im Folgenden näher erläutert.

Es zeigen
- Fig. 1:: einen schematischen Schnitt durch eine Reflexionsminderungsschicht mit drei auf einem durchlässigen Substrat aufgebrachten Schichten zur Reflexionsminderung bei einer Wellenlänge von 248 nm und großen Einfallswinkeln im Bereich von ca. 74°;
- Fig. 2:: ein Diagramm, das Meßwerte für den Reflexionsgrad der in Fig. 1 dargestellten Schicht als Funktion des Einfallswinkels θ zeigt;
- Fig. 3:: ein Diagramm, das für ein Dreischichtsystem mit Aluminiumoxid als hochbrechendem Material Meßwerte für den Reflexionsgrad als Funktion des Einfallswinkels θ für eine Wellenlänge λ=193 nm zeigt;
- Fig. 4:: einen schematischen Schnitt durch eine Reflexionsminderungsschicht mit vier Schichten auf einem durchlässigen Substrat;
- Fig. 5:: ein Diagramm, das einen Vergleich berechneter Werte für den Reflexionsgrad von Mehrfachschichten als Funktion des Einfallswinkels bei λ=248 nm zeigt, wobei für p-polarisiertes Licht eine Dreifachschicht und für s-polarisiertes Licht eine Vierfachschicht verwendet wird; und
- Fig. 6:: ein Diagramm, daß einen Vergleich berechneter Werte für den Reflexionsgrad von Mehrfachschichten als Funktion des Einfallswinkels bei λ=193 nm zeigt, wobei für p-polarisiertes Licht eine Dreifachschicht und für s-polarisiertes Licht eine Vierfachschicht verwendet wird.

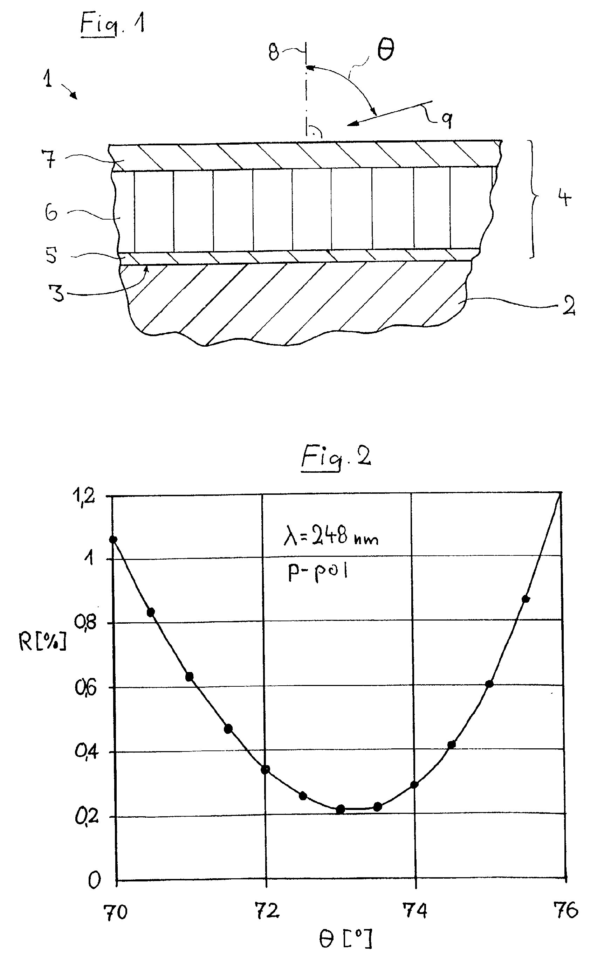

In Fig. 1 ist ein schematischer Schnitt durch den Oberflächenbereich einer optischen Komponente 1, die ein Substrat 2 aus einem für Ultraviolettlicht mit einer Wellenlänge von 248 nm transparentem Material aufweist. Auf die gezeigte, ebene Oberfläche 3 des Substrats, bei der es sich beispielsweise um die Hypothenusenfläche eines Prismas handeln kann, ist zur Reflexionsminderung eine mehrlagige Antireflexbeschichtung 4 mit drei übereinanderliegenden Schichten 5, 6 und 7 aufgebracht.

Das Substrat besteht aus einkristallinem Calciumfluorid (CaF₂) mit einem Brechungsindex n=1,47, also einem Brechungsindex, der demjenigen von alternativ verwendbaren Materialien wie z.B. synthetischem Quarzglas (SiO₂) mit n=1,5 ähnlich ist. Die direkt auf die Oberfläche 3 des Substrats aufgetragene erste Schicht 5 besteht im Wesentlichen aus Hafniumoxid (HfO₂), das bei einer Wellenlänge von λ=248 nm einen relativ hohen Brechungsindex von n=2,1 aufweist. Die substratnächste, hochbrechende Schicht 5 ist mit ca. 10 nm physikalischer Schichtdicke im Vergleich zu den üblicherweise für Entspiegelungen verwendeten "Quaterwave-Schichtdicken" sehr dünn und beträgt nur ca. 1/3 dieser "Quaterwave-Schichtdicke". Die darüberliegende, zweite Schicht 6 besteht im Wesentlichen aus Magnesiumfluorid (MgF₂), das im Vergleich zum Substrat 2 einen niedrigeren Brechungsindex von ca. n=1,41 aufweist. Die Schichtdicke der aus niedrigbrechendem Material bestehenden Schicht 6 beträgt mit ca. 94,4 nm fast das Zehnfache der dünnen, ersten Schicht 5, wobei diese Schichtstärke mehr als dem Doppelten der entsprechenden "Quaterwave-Schichtdicke" (43.7 nm MgF₂) entspricht. Die äußere, dritte Schicht 7, welche normalerweise an Luft, ein anderes gasförmiges Medium oder Vakuum mit einem Brechungsindex von ca. n=1 grenzt, besteht wieder aus Hafniumoxid, hat jedoch im Vergleich zur substratnächsten Schicht 5 etwa die dreifache Schichtdicke (28.8 nm), welche der "Quarterwave-Schichtdicke" für Hafniumoxid bei λ=248 nm entspricht.

Die Schichten des gezeigten und aller folgenden Beispiele sind in an sich bekannter Weise durch physikalische Gasphasenabscheidung (PVD) in Vakuum auf das Substrat 2 aufgebracht. Zur Belegung kann auch jede andere geeignete Technik verwendet werden.

Das hier beispielhaft gezeigte Dreischichtsystem zeichnet sich gegenüber üblichen, für Entspiegelungszwecke bekannten Mehrschichtsystemen u.a. dadurch aus, daß mit Hafniumoxid ein Beschichtungsmaterial verwendet wird, das im vorgesehenen Wellenlängenbereich (λ=248 nm) in geringem, aber meßbaren Maße Absorption zeigt. Während bei üblichen, als nicht absorbierend bezeichneten Materialien der Absorptionskoeffizient k typischerweise Werte von unterhalb 10⁻⁶ aufweist, liegt der Absorptionskoeffizient von Hafniumoxid bei λ=248 nm bei ca. k=10⁻³. Es hat sich gezeigt, daß dieser Nachteil sich praktisch kaum auswirkt und vom Vorteil des hohen Brechungsindex des Materials deutlich überwogen wird. Zudem kann die Gesamtabsorption gering gehalten werden, wenn die Gesamtdicke der aus absorbierendem Material bestehenden Schichten gering gehalten wird. Im Beispiel beträgt diese Gesamtschichtdicke der Schichten 5 und 7 weniger als 40 nm, wodurch typische, für absorbierende Materialien erwartete Nachteile, wie verstärkte Aufheizung der Schichten und damit verbundene Schichtdegradation, praktisch nicht auftreten. Dauerversuche zur Laserbeständigkeit, bei denen Schichten mit vergleichbarem Schichtenaufbau Laserimpulsen mit Energiedichten von ca. 30 mJ/cm² ausgesetzt waren, zeigen auch nach mehreren Milliarden Impulsen keine Schichtablösung, Risse oder andere Degradationen, was die Laserbeständigkeit dieser Schichten belegt.

Wesentliche optische Eigenschaften der gezeigten Dreischicht-Entspiegelung werden anhand des Meßdiagramms in Fig. 2 erläutert. Dort ist der Reflexionsgrad R (in Prozent) des in Fig. 1 gezeigten Schichtsystems in Abhängigkeit vom Einfallswinkel θ gezeigt, in dem p-polarisiertes UV-Licht mit einer Wellenlänge von λ=248 nm einfällt. Entsprechend der Konvention bezeichnet der Einfallswinkel θ den Winkel zwischen der Oberflächennormalen 8 und der Einfallsrichtung 9, die gemeinsam die Einfallsebene aufspannen, in der der Vektor des elektrischen Feldes des einfallenden UV-Lichtes schwingt. Es ist zu erkennen, daß der Reflexionsgrad der mit der dreilagigen Antireflexschicht 4 beschichteten Oberfläche im Einfallswinkelbereich zwischen ca. 70,5° und ca. 75,5° unterhalb von 1% liegt und im Bereich zwischen ca. 72° und ca. 74,5° deutlich unter 0,5%. Im Winkelbereich zwischen ca. 72,5° und ca. 74° ist eine fast vollständige Entspiegelung erreicht, bei der die Restreflexion unterhalb von ca. 0,3% liegt. Der Einfluß der Absorption ist mit ca. 0,2% sehr gering, so daß im Winkelbereich zwischen ca. 72,5° und 74° Transmissionsgrade von 99,5° oder besser erzielbar sind.

Das anhand von Fig. 1 beispielhaft erläuterte Schichtdesign ist gegenüber kleinen Variationen der Schichtdicken, wie sie durch Prozeßschwankungen während der Beschichtung auftreten können, relativ tolerant. So ändern z.B. Dickenänderungen um + 5% den Reflexionsgrad nur unwesentlich um ca. 0,3%. Es sind auch im wesentlichen identische Schichtdicken des hochbrechenden Materials möglich. Eine Dreifachschicht mit 21,5 nm HfO₂ als erste Schicht, 99,7 nm MgF₂ als zweite Schicht und 21,5 nm HfO₂ als dritte Schicht hat vergleichbare optische Eigenschaften. Alternativ zu Hafniumoxid können auch andere dielektrische Substanzen oder Materialkombinationen mit vergleichbaren optischen Eigenschaften, beispielsweise Zirkonoxid verwendet werden. Gegebenenfalls kann statt der Magnesiumfluoridschicht auch eine Schicht aus einem anderen, im Vergleich zum Substrat niedrigbrechenden Material verwendet werden. Vorteilhaft ist die alternierende Abfolge von hochbrechendem und niedrigbrechendem Material, wobei die substratnächste Schicht einen höheren Brechungsindex als das Substratmaterial aufweisen sollte.

Bei einer Wellenlänge von λ=193 nm ist die Absorption von Hafniumoxid oder vergleichbaren Materialien so hoch, daß diese Materialien für Entspiegelungsschichten nicht oder nur in Ausnahmefällen verwendbar sind. Bei dieser Wellenlänge hat sich ein anderes, nicht bildlich dargestelltes Dreischichtsystem bewährt, bei dem als hochbrechende Substanz Aluminiumoxid verwendet wurde.

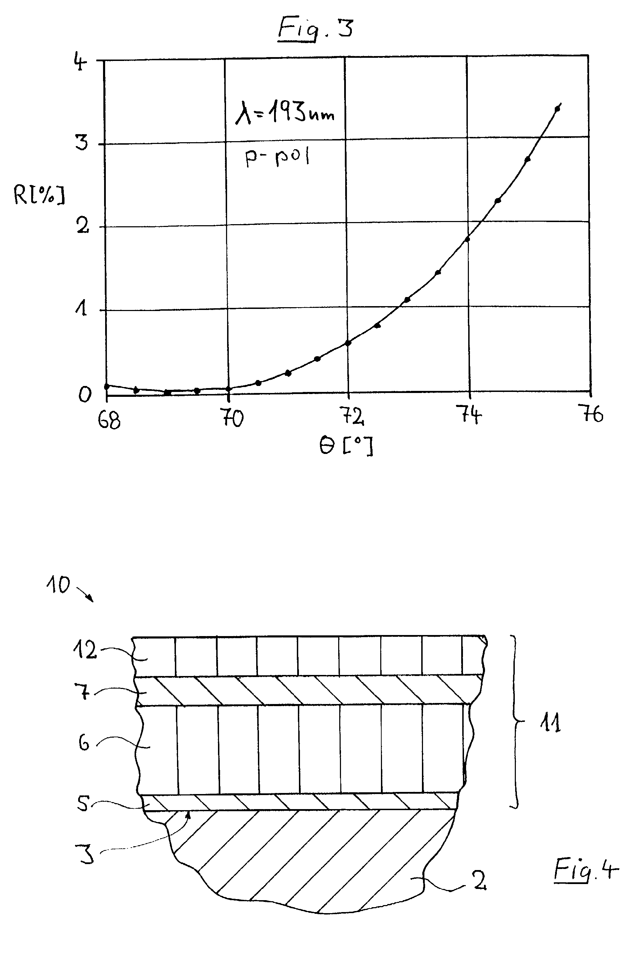

Auch dieses Schichtsystem besteht aus nur drei Schichten, wobei eine hochbrechende Aluminiumoxidschicht direkt an das CaF₂ - Substrat grenzt und zwischen dieser und der außenliegenden Aluminiumoxidschicht eine dickere Schicht aus Magnesiumfluorid angeordnet ist. Bei einer Ausführungsform, deren optische Eigenschaften anhand des Meßdiagramms von Fig. 3 erläutert werden, ist zwischen zwei gleichdicken Schichten aus Aluminiumoxid mit Schichtdicken von jeweils 31.5 nm eine Schicht aus Magnesiumfluorid mit einer Dicke von 45 nm angeordnet. Aus Fig. 3 ist ersichtlich, dass bei diesem Schichtsystem und einfallendem p-polarisiertem Licht mit λ=193 nm das Minimum der Restreflexion bei einem Einfallswinkel von ca. 69° bis 70° liegt, bei dem die Restreflexion weniger als 0,1 % beträgt. Auch bei Abweichungen von diesem optimalen Einfallswinkel um ± 2° werden noch Restreflexionen von weniger als 0,5 % erreicht, wobei z.B. die Restreflexion bei θ=72° noch weniger als 1 % beträgt.

Es ist zu erkennen, daß bei erfindungsgemäßen Dreischichtsystemen sich das Minimum der Restreflexion zu kleineren Einfallswinkeln verschiebt, je kürzer die Wellenlänge des einfallenden Lichtes wird. Jedoch kann auch bei λ=193 nm und Einfallswinkeln um θ=74° noch eine substanzielle Entspiegelung gegenüber einem unbeschichteten Substrat erreicht werden, da bei der in Fig. 3 gezeigten Dreifachbeschichtung die Restreflexion ca. 1,8% beträgt, während sie bei einem unbeschichteten CaF₂ - Substrat bei ungefähr R=8% liegt.

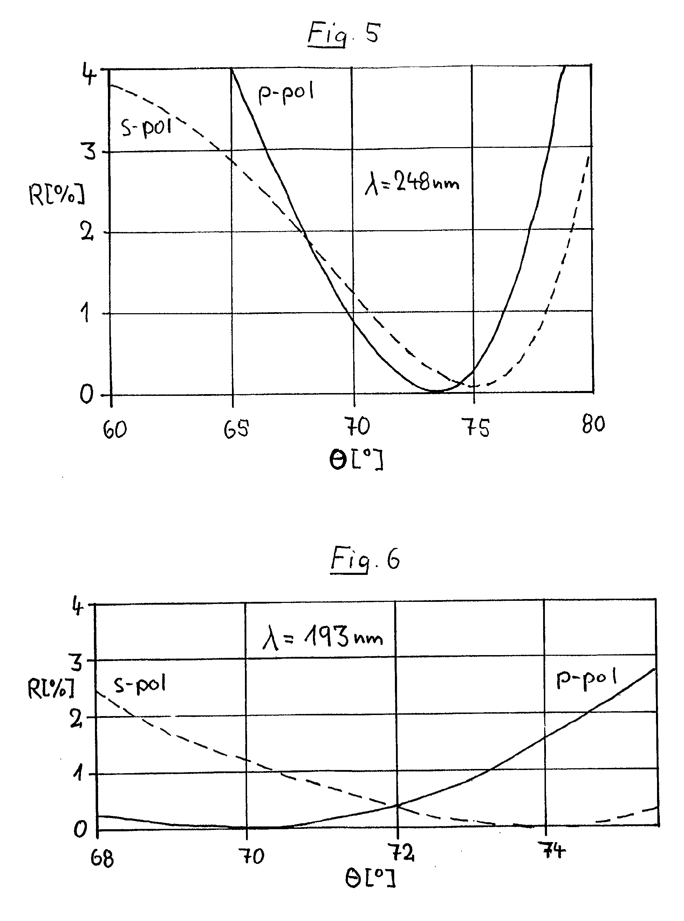

Anhand der Fig. 4 bis 6 wird nun beispielhaft erläutert, daß auf Basis der beispielhaft erläuterten Dreifachschichten durch Aufbringen einer einzigen, weiteren Schicht aus niedrigbrechendem Material auch für s-polarisiertes Licht wirksame Antireflexbeschichtungen für die angegebenen Wellenlängen- und Einfallswinkelbereiche erzeugbar sind. Hierzu zeigt Fig. 4 einen schematischen Schnitt durch den Oberflächenbereich einer optischen Komponente 10, die sich von der optischen Komponente 1 in Fig. 1 im wesentlichen dadurch unterscheidet, daß auf der Oberfläche 3 des Substrates 2 eine Antireflexschicht 11 mit vier übereinanderliegenden Schichten 5, 6, 7, 12 aufgebracht ist. Dabei sind die drei substratnächsten Schichten 5, 6, 7 hinsichtlich des Schichtmaterials identisch mit den Schichten 5, 6, 7 aus Fig. 1 und unterscheiden sich von diesen nur durch geringfügige Dickenunterschiede. Die Schichtstärke der substratnächsten Hafniumoxidschicht 5 beträgt ca. 14 nm, diejenige der darüberliegenden Magnesiumfluoridschicht 6 ca. 109 nm und diejenige, der darüberliegenden Hafniumoxidschicht 7 ca. 30 nm. Auf diese ist als äußere Schicht eine Magnesiumfluoridschicht 12 mit ca. 53 nm Schichtdicke aufgebracht.

Die optischen Eigenschaften der vierlagigen Antireflexschicht 11 werden anhand von Fig. 5 erläutert, die den Reflexionsgrad R als Funktion des Einfallswinkels θ für einfallendes UV-Licht mit 248 nm Wellenlänge zeigt. Dabei zeigt die durchgezogene Linie der Kurve in Fig. 2 entsprechende berechnete Werte für den Reflexionsgrad der Dreifachschicht in Fig. 1 für p-polarisiertes Licht, während die gestrichelte Linie entsprechende Werte der in Fig. 4 gezeigten Vierfachschicht für s-polarisiertes Licht zeigt. Es ist zu erkennen, daß die Vierfachbeschichtung 11 für Einfallswinkel zwischen ca. 71° und ca. 78° die Restreflexion auf Werte unterhalb 1 % reduziert, wobei die Restreflexion im Bereich zwischen ca. 73,5° und ca. 76° unterhalb von 0,3% liegt und bei ca. 75° ein Minimum von ca. 0,1% hat.

In Fig. 6 ist ein entsprechendes Diagramm für UV-Licht mit λ=193 nm gezeigt, wobei die durchgezogene Linie der Meßkurve aus Fig. 3 entspricht und wie diese eine Dreifachschicht repräsentiert, bei der zwischen einer substratnächsten und einer äußeren Schicht aus Aluminiumoxid mit jeweils 31,5 nm eine Schicht aus Magnesiumfluorid mit einer Dicke von ca. 45 nm angeordnet ist. Auf dieses Schichtsystem ist zur Verbesserung der Reflexminderung bei s-polarisiertem Licht eine weitere Schicht aus Magnesiumfluorid mit Schichtdicke von ca. 45 nm aufgebracht. Diese periodische Schichtstruktur, bei der jeweils die Schichtdicken des hochbrechenden, geringfügig absorbierenden Materials (Aluminiumoxid) und des niedrigbrechenden Materials (Magnesiumfluorid) gleich sind, reduziert die Restreflexion bei s-polarisiertem Licht im Winkelbereich zwischen ca. 71° und ca. 76° auf Werte unterhalb 1%, wobei zwischen ca. 72° und ca. 75° die Restreflexion weniger als 0,5% beträgt und bei ca. 74° im wesentlichen verschwindet.

Zur Herstellung laserbeständiger, optischer Komponenten mit geringer Restreflexion für UV-Licht aus einem Wellenlängenbereich von ca. 150 nm bis ca. 250 nm bei großen Einfallswinkeln aus dem Bereich von ca. 70° bis ca. 80°, insbesondere aus dem Bereich zwischen ca. 72° und 76°, werden Reflexminderungs-Mehrlagenbeschichtungen mit nur drei oder vier Schichten vorgeschlagen. Für einfallendes p-polarisiertes UV-Licht können mit Vorteil Dreischichtsysteme verwendet werden, bei denen zwischen zwei Schichten aus hochbrechendem Material, insbesondere aus Hafniumoxid oder Aluminiumoxid, eine Schicht aus niedrigbrechendem Material, insbesondere Magnesiumfluorid, angeordnet ist. Eine Optimierung der Reflexminderung für s-polarisiertes Licht kann durch Aufbringung einer weiteren Schicht aus niedrigbrechendem Material erreicht werden.

Ein besonderer Aspekt der Erfindung liegt in der Erkenntnis, daß bei mehrlagigen Antireflexbeschichtungen nicht nur sogenannte nichtabsorbierende Materialien (mit Absorptionskoeffizienten k von typischerweise unterhalb 10⁻⁶) verwendbar sind, sondern auch solche Materialien, die in geringen Maße Absorption zeigen, solange der Absorptionskoeffizient k Werte von 0,01, insbesondere 0,001 nicht wesentlich überschreitet. Insbesondere können Materialien wie Hafniumoxid oder gegebenenfalls Zirkonoxid bei Wellenlängen um λ=248 nm einsetzbar sein, wobei zweckmäßig nur geringe Gesamtschichtdicken von deutlich weniger als 100 nm anzustreben sind, um negative Auswirkungen von Absorptionseffekten zu vermeiden. Diese Bedingungen sind besonders bei Mehrschichtsystemen mit nur wenigen, beispielsweise drei oder vier Schichten ohne weiteres einzuhalten.

Es hat sich in Versuchen gezeigt, dass eine Anti-Reflex-Mehrlagenbeschichtung mit einer außen liegenden Schicht aus Aluminiumoxid auch im Hinblick auf die Vermeidung oder Verminderung von Kontaminationseffekten vorteilhaft ist. Es ist bekannt, dass sich unter der Wirkung kurzwelliger Ultraviolettstrahlung auf üblichen Beschichtungsmaterialien, wie Magnesiumfluorid, nach einer gewissen Zeit einen Oberflächenbelag bildet, der die Lebensdauer der verwendeten optischen Elemente reduzieren und zur Steigerung von Streulichtanteilen führen kann. Beispielsweise ist aus der US 5,685,895 eine Belagsbildung mit Amoniumsalzen und anderen Verunreinigungen bekannt. Bei Bestrahlungsversuchen, in denen Mehrlagen-Antireflexbeschichtungen mit außenliegender Aluminiumoxid-Schicht mit entsprechenden Mehrlagenbeschichtungen und einer äußeren Schicht aus einem anderen Material verglichen wurden, hat sich herausgestellt, dass eine außenliegende Belagsschutzschicht aus Aluminiumoxid zu einer deutlich messbaren Verzögerung der Kontamination geführt hat. Dadurch konnte nachgewiesen werden, dass eine letzte Schicht aus Aluminiumoxid (Al₂O₃) die Rate der Salzbildung auf optischen Oberflächen unter UV-Bestrahlung signifikant verringern kann. Daher umfasst die Erfindung auch ein Verfahren zum Schutz beschichteter optischer Komponenten gegen Belagsbildung, welches dadurch gekennzeichnet ist, dass auf einer Mehrlagenbeschichtung eine äußere Schicht aus Aluminumoxid aufgetragen wird. Außerdem wird eine Verwendung von Aluminiumoxid als äußere Schutzschicht gegen Belagsbildung bei Mehrlagenbeschichtungen vorgeschlagen. Diese überraschende und vorteilhafte Wirkung gegen Belagsbildung ist unabhängig von der Anzahl der Schichten des optischen Mehrschichtsystems und kann insbesondere auch bei Anti-Reflexbeschichtungen mit fünf oder mehr Schichten mit Vorteil genutzt werden.

## Patentansprüche

1. Optische Komponente (1, 10) mit geringem Reflexionsgrad für Ultraviolettlicht aus einem Wellenlängenbereich zwischen ca. 150 nm und ca. 250 nm bei großen Einfallswinkeln, insbesondere zwischen ca. 70° und ca. 80°, mit einem Substrat (2), bei dem zur Reflexionsminderung auf mindestens eine Oberfläche (3) ein Mehrschichtsystem (4, 11) mit mehreren übereinanderliegenden Schichten (5, 6, 7, 12) aufgebracht ist, wobei eine Schicht aus einem hochbrechenden oder einem niedrigbrechenden dielektrischen Material besteht, **dadurch gekennzeichnet, daß** das Mehrschichtsystem (4, 11) weniger als fünf Schichten (5, 6, 7, 12) aufweist.

2. Optische Komponente nach Anspruch 1, **dadurch gekennzeichnet, daß** das Mehrschichtsystem (4; 11) drei oder vier Schichten (5, 6, 7, 12) aufweist.

3. Optische Komponente nach Anspruch 1 oder 2, **dadurch gekennzeichnet, daß** die an das Substrat (2) angrenzende, erste Schicht (5) aus einem hochbrechenden Material besteht.

4. Optische Komponente nach einem der vorhergehenden Ansprüche, **dadurch gekennzeichnet, daß** die Schichten (5, 6, 7, 12) des Mehrschichtsystems (1, 10) abwechselnd aus hochbrechendem und niedrigbrechendem Material bestehen.

5. Optische Komponente nach einem der vorhergehenden Ansprüche, **dadurch gekennzeichnet, daß** das hochbrechende Material bei der vorgesehenen Wellenlänge einen Brechungsindex von 1,7 oder größer aufweist, wobei der Brechungsindex vorzugsweise größer als 1,9 oder 2,0 ist.

6. Optische Komponente nach einem der vorhergehenden Ansprüche, **dadurch gekennzeichnet, daß** das hochbrechende Material im wesentlichen aus einem Metalloxid besteht, insbesondere im wesentlichen aus Hafniumoxid, Zirkonoxid oder Aluminiumoxid.

7. Optische Komponente nach einem der vorhergehenden Ansprüche, **dadurch gekennzeichnet, daß** mindestens eines der Materialien, insbesondere das hochbrechende Material bei der vorgesehenen Wellenlänge des Ultraviolettlichts geringfügig absorbierend ist, wobei vorzugsweise der Absorptionsindex k des hochbrechenden Materials größer oder gleich ca. 10⁻⁶ ist und weniger als 0,01, insbesondere weniger als 0,005 beträgt, vorzugsweise ca. 0,001.

8. Optische Komponente nach einem der vorhergehenden Ansprüche, **dadurch gekennzeichnet, daß** die Gesamtdicke der Schichten (5, 7) aus geringfügig absorbierendem Material kleiner als ca. 100 nm ist, vorzugsweise kleiner als 70 nm, insbesondere kleiner als 50 nm.

9. Optische Komponente nach einem der vorhergehenden Ansprüche, **dadurch gekennzeichnet, daß** das niedrigbrechende Material im wesentlichen aus einem Fluorid besteht, insbesondere im wesentlichen aus Magnesiumfluorid.

10. Optische Komponente nach einem der vorhergehenden Ansprüche, **dadurch gekennzeichnet, daß** das Substrat aus vorzugsweise glasartigem Siliziumdioxid besteht.

11. Optische Komponente nach einem der Ansprüche 1 bis 9, **dadurch gekennzeichnet, daß** das Substrat (2) aus einem vorzugsweise fluoridischen Kristall besteht, insbesondere aus Calciumfluorid oder Magnesiumfluorid.

12. Optische Komponente nach einem der vorhergehenden Ansprüche, **dadurch gekennzeichnet, daß** sie für Ultraviolettlicht mit einer Wellenlänge von 248 nm für Einfallswinkel aus dem Bereich 74+2° eine Restreflexion von weniger als 1% aufweist, wobei die Restreflexion im Bereich zwischen ca. 73° und ca. 75° weniger als 0,5% beträgt.

13. Optische Komponente nach einem der Ansprüche 1 bis 12, **dadurch gekennzeichnet, daß** sie für Ultraviolettlicht mit einer Wellenlänge von 193 nm für Einfallswinkel zwischen ca. 70° und ca. 75° eine Restreflexion von weniger als 2% aufweist, wobei die Restreflexion bei p-polarisiertem Licht bei Einfallswinkeln von 70+2° oder bei s-polarisiertem Licht bei Einfallswinkeln von 74+2° weniger als 0,5% beträgt.

14. Optische Komponente nach einem der vorhergehenden Ansprüche, **dadurch gekennzeichnet, daß** der durch das Mehrschichtsystem verursachte Absorptionsgrad weniger als 1% beträgt, insbesondere weniger als 0,5%.

15. Optische Komponente (1, 10) mit geringem Reflexionsgrad für Ultraviolettlicht aus einem Wellenlängenbereich zwischen ca. 150 nm und ca. 250 nm bei großen Einfallswinkeln, insbesondere zwischen ca. 70° und ca. 80°, mit einem Substrat (2), bei dem zur Reflexionsminderung auf mindestens einer Oberfläche (3) ein Mehrschichtsystem (4, 11) mit mehreren übereinanderliegenden Schichten (5, 6, 7, 12) aufgebracht ist, wobei eine Schicht aus hochbrechendem oder niedrigbrechendem dielektrischen Material besteht, **dadurch gekennzeichnet, daß** das Mehrschichtsystem (1, 10) mindestens eine Schicht aus einem geringfügig absorbierenden Material aufweist, das bei der Wellenlänge des einfallenden Ultraviolettlichts einen Absorptionskoeffizienten k von mehr als 10⁻⁶ aufweist.

16. Optische Komponente nach Anspruch 14, dadurch gekennzeichnet, daß der Absorptionskoeffizient k weniger als 0,01, insbesondere weniger als 0,005 beträgt, wobei der Absorptionskoeffizient vorzugsweise nicht wesentlich mehr als 0,001 beträgt.

17. Optische Komponente nach Anspruch 14 oder 15, **dadurch gekennzeichnet, daß** das geringfügig absorbierende Material ein Metalloxid ist, wobei es vorzugsweise im wesentlichen aus Hafniumoxid oder Aluminiumoxid besteht.

18. Verwendung mindestens eines geringfügig absorbierenden dielektrischen Materials zur Bildung mindestens einer Schicht eines Mehrschichtsystems, das auf eine Oberfläche eines optischen Substrats zur Reflexionsminderung für Ultraviolettlicht aus einem Wellenlängenbereich zwischen ca. 150 nm und ca. 250 nm aufgebracht wird, wobei das geringfügig absorbierende Material für das einfallende Ultraviolettlicht einen Absorptionskoeffizienten k von mehr als 10⁻⁶ aufweist.

19. Optische Komponente mit geringem Refelxionsgrad für Ultraviolettlicht aus einem Wellenlängenbereich zwischen ca. 150 nm und ca. 250 nm, insbesondere bei großen Einfallswinkeln zwischen ca. 70° und ca. 80°, mit einem Substrat, bei dem zur Reflexionsminderung auf mindestens eine Oberfläche ein Mehrschichtsystem mit mehreren übereinanderliegenden Schichten aufgebracht ist, wobei eine Schicht aus einem hochbrechenden oder einem niedrigbrechenden dielektrischen Material besteht, **dadurch gekennzeichnet, dass** das Mehrschichtsystem als äußere, von dem Substrat entfernte Schicht eine Schicht aus Aluminiumoxid (Al₂O₃) aufweist.

20. Verwendung von Aluminumoxid (Al₂O₃) zur Bildung der äußeren Schicht einer optischen Beschichtung, insbesondere eines Anti-Reflex-Mehrschichtsystems, zur Verminderung der Bildung von Salzbelägen unter Einwirkung von Ultraviolettlicht aus einem Wellenlängenbereich zwischen ca. 150 nm und 250 nm.
